# EUROPEAN PATENT APPLICATION

(11) **EP 3 540 640 A1**
(43) Date of publication of application: **18.09.2019**
(21) Application number: 19161881.8
(22) Date of filing: 11.03.2019
(51) Int. Cl.: G06K 9/00, H04N 13/00

(54) **INFORMATION PROCESSING APPARATUS, SYSTEM, MOVABLE BODY, METHOD OF INFORMATION PROCESSING, AND PROGRAM**

(30) Priority: 16.03.2018 JP 2018050205
(71) Applicant: Ricoh Company, Ltd., Tokyo 143-8555 (JP)
(72) Inventor: MOTOHASHI, Naoki, Tokyo 143-8555 (JP)
(74) Representative: SSM Sandmair

(57) **Abstract**

An information processing apparatus (51) includes an acquisition unit (1102), and a data generation unit (1103). The acquisition unit (1102) is configured to acquire a distance image including distance information for each pixel. The data generation unit is configured to generate data based on the distance image. The data generation unit (1103) is configured to access each of a plurality of pixels while thinning the distance image, determine distance information of a non-access pixel indicating a pixel not to be accessed, based on distance information of an access pixel indicating a pixel to be accessed, and generate the data using the determined distance information.

## Description

### BACKGROUND OF THE INVENTION

### 1. Field of the Invention

The present invention relates to an information processing apparatus, a system, a movable body, a method of information processing, and a program.

### 2. Description of the Related Art

Conventionally, in automobile safety, automobile body structures and the like have been developed in view of, when a pedestrian and an automobile collide with each other, how the pedestrian can be protected and how passengers can be protected. However, in recent years, with the development of information processing technologies and image processing technologies, technologies that detect humans and automobiles at high speed have been developed. An automobile that automatically brakes before it collides with an object to prevent a collision by applying these techniques has already been developed. In addition, to reduce burdens on drivers while driving in addition to safety performance, adaptive cruise control (ACC), which is a control function that recognizes a forward vehicle and automatically follows it, has already been on the market as an on-vehicle system.

To achieve such control, a distance from the subject vehicle to a forward object is required to be accurately measured, and for this purpose, distance measurement by a millimeter-wave radar or a laser radar, distance measurement by a stereo camera, and the like have already been employed. To practically implement automobile automatic control by on-vehicle image recognition techniques, it is necessary that objects appearing on a screen be recognized based on distance information measured by any of the above apparatuses and control be performed for each of the objects. Assumed is that control is changed depending on whether a detected object is a pedestrian or a vehicle, for example.

When distance measurement is performed with a stereo camera, for example, a parallax image (an example of a distance image) is generated based on a displacement amount in a local area photographed by right and left cameras, whereby a distance can be measured for each pixel in the image. When object detection is performed using this parallax image, first, each pixel in the parallax image is voted to a map (a V map: V-disparity map) with a parallax value (a distance) as its horizontal axis and with the y coordinate of the parallax image as its vertical axis, and a road surface shape is estimated from a distribution shape on the map. Next, only pixels at higher positions than the estimated road surface among the pixels of the parallax image are voted to a map (a U map: U-disparity map) with the x coordinate of the parallax image as its horizontal axis and with the parallax value as its vertical axis. An area in which similar parallax values gather with high density on U-disparity map (a parallax cluster) is detected as an object.

When an object is detected by the above method, there is a problem in that when each map is generated, the parallax image and the other map are required to be accessed, and much processing time is required. Given these circumstances, a method that accesses the parallax image while thinning it is known (refer to Japanese Unexamined Patent Application Publication No. 2017-083326, for example).

However, the method that performs access while simply thinning pixels may cause losses of important information and degrade detection (recognition) accuracy.

The present invention has been made in view of the foregoing, and an object thereof is to provide an information processing apparatus, a system, a movable body, a method of information processing, and a program that can inhibit a reduction in object detection accuracy while reducing a processing time.

### SUMMARY OF THE INVENTION

According to an aspect of the present invention, an information processing apparatus includes an acquisition unit, and a data generation unit. The acquisition unit is configured to acquire a distance image including distance information for each pixel. The data generation unit is configured to generate data based on the distance image. The data generation unit is configured to access each of a plurality of pixels while thinning the distance image, determine distance information of a non-access pixel indicating a pixel not to be accessed, based on distance information of an access pixel indicating a pixel to be accessed, and generate the data using the determined distance information.

An aspect of the present invention can inhibit a reduction in object detection accuracy while reducing a processing time.

### BRIEF DESCRIPTION OF THE DRAWINGS

FIG. 1 is a diagram of a vehicle mounting a device control system according to a first embodiment;
FIG. 2 is a diagram of a hardware configuration of the device control system according to the first embodiment;
FIG. 3 is a diagram of a hardware configuration of an imaging unit according to the first embodiment;
FIG. 4 is a diagram of a functional configuration of the device control system according to the first embodiment;
FIG. 5 is a diagram for illustrating a relation between a parallax image and a V map;
FIG. 6 is a diagram for illustrating a relation between the parallax image and a U map;
FIG. 7 is a diagram for illustrating thinning of pixels;
FIG. 8 is a diagram for illustrating difference between an all pixels voting system in a horizontal direction in the U map and a virtual voting system of the first embodiment;
FIG. 9 is a diagram for illustrating difference between the all pixels voting system in a vertical direction in the U map and the virtual voting system of the first embodiment;
FIG. 10 is a comparison diagram when the all pixels voting system or the virtual voting system is used for the vertical direction in generating the V map;
FIG. 11 is a diagram of a functional configuration of a U map generation unit of the first embodiment;
FIG. 12 is a diagram of a functional configuration of a data generation unit of the first embodiment;
FIG. 13 is a diagram of an operation example of the U map generation unit of the first embodiment;
FIG. 14 is a diagram for illustrating difference between the virtual voting system of the first embodiment and a virtual voting system of a second embodiment;
FIG. 15 is a diagram of a functional configuration of the U map generation unit of the second embodiment;
FIG. 16 is a diagram of a functional configuration of a data generation unit of the second embodiment; and
FIG. 17 is a diagram of an operation example of the U map generation unit of the second embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings. The following describes embodiments of an information processing apparatus, a system, a movable body, a method of information processing, and a program according to the present invention in detail with reference to the accompanying drawings.

### First Embodiment

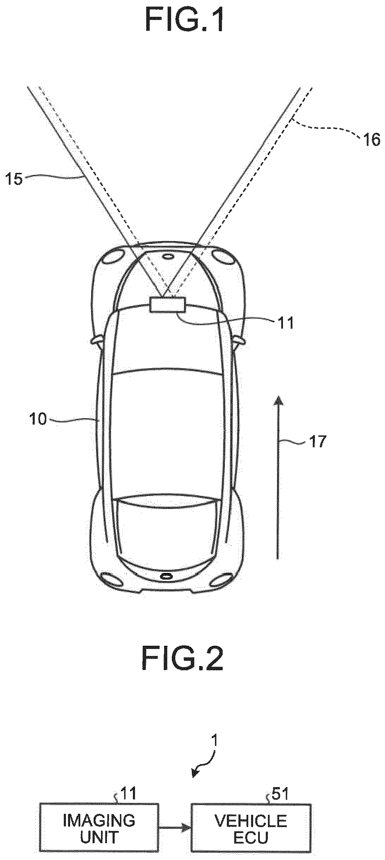

FIG. 1 is a schematic diagram of an example of a vehicle 10 (an example of the "movable body") mounting a device control system 1 (an example of the "system") according to a first embodiment. An imaging unit 11 is installed on the upper part (near a rearview mirror) of a windshield of the vehicle 10 according to the present embodiment. The imaging unit 11 includes a stereo camera imaging the forward of the vehicle 10 in a travel direction 17 and an analysis unit (an example of the "information processing apparatus") analyzing a taken image taken by the stereo camera. The stereo camera acquires a taken image of a left field of view 15 and a taken image of a right field of view 16 by horizontally arranged two camera units. The analysis unit analyzes targets to be recognized such as a road surface on which the vehicle 10 is travelling, a forward vehicle, pedestrians, and obstacles based on the right and left taken images supplied from the stereo camera. The vehicle 10 is installed with a vehicle ECU (an example of a "control apparatus") that performs control (control of various kinds of on-vehicle devices, steering control or braking control of the vehicle 10, and the like) based on analysis results of the analysis unit (results of information processing by the information processing apparatus).

FIG. 2 is diagram of an example of an overall hardware configuration of the device control system 1 according to the first embodiment. The device control system 1 includes the imaging unit 11 and a vehicle engine control unit (ECU) 51. The vehicle ECU 51 is a unit including a circuit that generates signals controlling a travel state of the vehicle 10 and includes a memory storing therein computer programs, a central processing unit (CPU) that performs certain arithmetic control processing by computer programs, and various kinds of logic circuits. The vehicle ECU 51 performs processing to perform control of the vehicle 10 such as automatic control of braking, acceleration, steering, and the like and output of warning based on analysis results of the analysis unit included in the imaging unit 11.

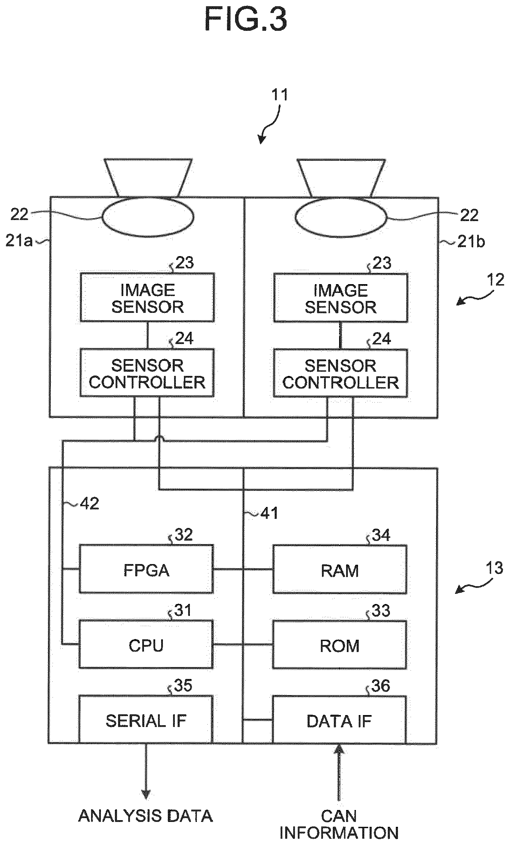

FIG. 3 is a diagram of an example of a hardware configuration of the imaging unit 11 according to the first embodiment. The imaging unit 11 according to the present embodiment includes a stereo camera 12 and an image analysis unit 13.

The stereo camera 12 is formed by a first camera unit 21a for a left eye and a second camera unit 21b for a right eye assembled in parallel. Both camera units 21a and 21b each include a lens 22, an image sensor 23, and a sensor controller 24. The image sensor 23 is a charge coupled device (CCD) or a complementary metal-oxide semiconductor (CMOS), for example. The sensor controller 24 is a device including a circuit for performing exposure control of the image sensor 23, image reading control, communication with an external circuit, transmission control of image data, and the like.

The image analysis unit 13 is an example of the "information processing apparatus" and acquires a distance image having distance information for each pixel and generates data based on the acquired distance image. Although the following describes a parallax image having a parallax value for each pixel by way of example as an example of the distance image, this is not limiting; an image having a distance measured value calculated by a millimeter-wave radar or a LIDAR for each pixel and an image having a combination of a parallax value and a distance measured value for each pixel can also be used as the distance image, for example. Although the following describes a V map and a U map, which will be described in detail below, by way of example as examples of the data based on the distance image, this is not limiting. Details of functions of the image analysis unit 13 will be described below.

The following describes a hardware configuration of the image analysis unit 13. As illustrated in FIG. 3, the image analysis unit 13 includes a CPU 31, a field-programmable gate array (FPGA) 32, a read only memory (ROM) 33, a random access memory (RAM) 34, a serial interface (IF) 35, a data IF 36, a data bus line 41, and a serial bus line 42.

The stereo camera 12 is connected to the image analysis unit 13 via the data bus line 41 and the serial bus line 42. The CPU 31 performs processing to execute the entire operation of the image analysis unit 13, image processing, image recognition processing, and the like in accordance with computer programs stored in the ROM 33. Brightness data (a brightness image in which a brightness value is set for each pixel) acquired by the respective image sensors 23 of both camera units 21a and 21b is written into the RAM 34 of the image analysis unit 13 via the data bus line 41. Change control data of a sensor exposure value from the CPU 31 or the FPGA 32, change control data of image reading parameters, various kinds of setting data, and the like are transmitted and received to and from the sensor controllers 24 via the serial bus line 42.

The FPGA 32 performs processing that requires real-time properties for data stored in the RAM 34. Examples of the processing that requires real-time properties include processing that generates the parallax image with the parallax value set for each pixel from the brightness image by performing gamma correction, distortion correction (parallelizing right and left images), parallax computation by block matching, and the like. The thus generated parallax image is again written into the RAM 34.

The CPU 31 performs control of the respective sensor controllers 24 of the stereo camera 12 and the overall control of the image analysis unit 13. The ROM 33 stores therein computer programs causing the CPU 31 or the FPGA 32 to execute various kinds of processing. The CPU 31 acquires controller area network (CAN) information (vehicle speed, acceleration, steering angle, yaw rate, and the like) of the vehicle 10, for example, as parameters via the data IF 36. The CPU 31 executes various kinds of processing such as estimation of a road surface shape, object recognition, and distance measurement using the brightness image and the parallax image stored in the RAM 34 in accordance with the computer programs stored in the ROM 33.

Analysis data showing analysis results by the image analysis unit 13 are supplied to external systems such as an automatic braking system, an automatic speed control system, an automatic steering system, and a warning system via the serial IF 35.

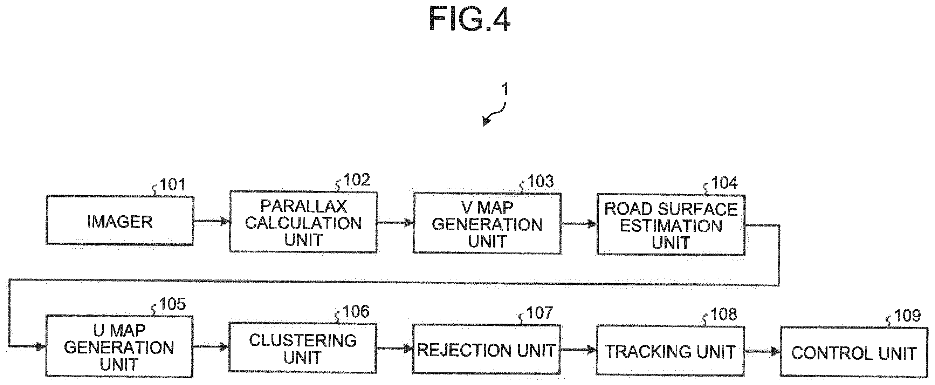

FIG. 4 is a diagram of an example of a functional configuration of the device control system 1 according to the first embodiment. The device control system 1 according to the present embodiment includes an imager 101, a parallax calculation unit 102, a V map generation unit 103, a road surface estimation unit 104, a U map generation unit 105, a clustering unit 106, a rejection unit 107, a tracking unit 108, and a control unit 109. FIG. 4 illustrates an example of a sequence from one-frame imaging by the imaging unit 11, through ending of image analysis processing including road surface estimation and object recognition, until starting vehicle control.

The imager 101 is a functional unit that images an area ahead of the vehicle 10 and acquires two brightness images (taken images). The imager 101 includes the imaging unit 11. One of the two brightness images acquired by the imager 101 (e.g., a brightness image of the left field of view 15 acquired by the first camera unit 21a) serves as a standard image, whereas the other (e.g., a brightness image of the right field of view 16 acquired by the second camera unit 21b) serves as a comparison image.

The parallax calculation unit 102 is a functional unit that calculates a parallax value of each pixel by block matching of a local area within an imaging range of the stereo camera 12 or the like using the brightness image as the standard image and the brightness image as the comparison image and generates the parallax image. The parallax calculation unit 102 includes the FPGA 32 and the CPU 31, for example.

The V map generation unit 103 generates the V map for use in the posterior road surface estimation unit 104 using the parallax image generated by the parallax calculation unit 102. The V map is an example of a "first map" and is a map indicating relation between positions in a vertical direction and parallax values d (an example of a "distance") in the parallax image (an example of the "distance image"). More specifically, the V map is a two-dimensional map with the parallax value d made to correspond to its horizontal axis and with the y coordinate of the parallax image made to correspond to its vertical axis and is generated by causing the parallax value d of each coordinates (x, y) of the parallax image to be voted to a corresponding position (d, y) on the V map. In the coordinates (d, y) on the V map, a value (a frequency value) indicating the frequency (point) of the parallax value d voted to this position is stored.

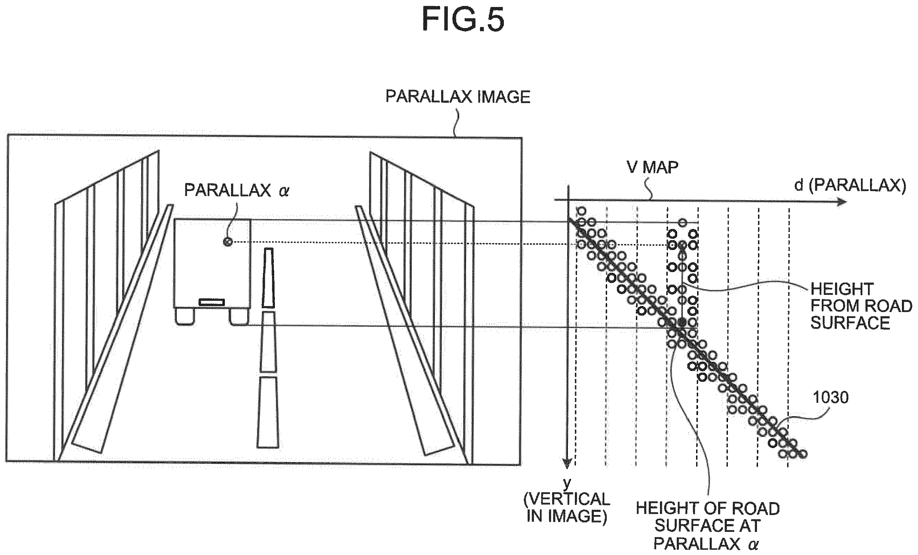

FIG. 5 is a diagram for illustrating a relation between the parallax image and the V map. As illustrated in FIG. 5, parallax voted to one line in a horizontal direction of the V map (a horizontal line) is parallax extracted from a certain one line in the horizontal direction in the parallax image. Although in the example in FIG. 5 the parallax image and the V map match in the y coordinate, this is not necessarily required to be so. Based on this relation, an object in the parallax image is present at the same distance from the subject vehicle and is thus distributed in a vertical direction on the V map (is distributed correspondingly to similar parallax values d (coordinates on the horizontal axis)). The parallax value d is characterized as having a larger value with a shorter distance and a smaller value with a longer distance. Consequently, when the V map has a left-upper origin as in FIG. 5, when each pixel (the parallax value d) in the parallax image is voted to the V map, the shape indicating the distribution of the parallax value d is higher toward the left. Estimation of a road surface shape by the road surface estimation unit 104 in the later stage is performed using the V map and, after estimation, can determine a y coordinate corresponding to a road surface height at the parallax value d. The symbol 1030 illustrated in FIG. 5 shows a result obtained by estimating the road surface shape on the V map illustrated in FIG. 5. The height from the road surface of a forward vehicle at a parallax α has the relation in the drawing. Consequently, this y coordinate difference (the difference between the y coordinate corresponding to the parallax α of the forward vehicle and the y coordinate corresponding to the road surface height at the parallax α) is the height from the road surface.

In the present embodiment, the V map generation unit 103 accesses (accesses in order) each of a plurality of pixels while thinning the parallax image (an example of the "distance image"), determines, based on the parallax value d (an example of the "distance information") of an access pixel indicating a pixel to be accessed, the parallax value d of a non-access pixel indicating a pixel not to be accessed, and generates the V map (an example of the "data based on the distance image") using the determined parallax value d. Details will be described below. Although the function of the V map generation unit 103 is implemented by executing a computer program by the CPU 31, this is not limiting; it may be implemented by an exclusive hardware circuit (e.g., the FPGA 32), for example.

Referring back to FIG. 4, the description is continued. The road surface estimation unit 104 estimates the road surface shape based on the V map generated by the V map generation unit 103. A method for generating the V map will be described below. The road surface estimation unit 104 includes the CPU 31 and the FPGA 32, for example.

The U map generation unit 105 generates the U map for use in the posterior clustering unit 106 using the parallax image generated by the parallax calculation unit 102 and an estimation result of the road surface shape by the road surface estimation unit 104. The U map is an example of a "second map" and shows relation between positions in the horizontal direction and the parallax values d (distance) above the height of a road surface in the parallax image (the distance image). More specifically, the U map is a two-dimensional map with the x coordinate of the parallax image made to correspond to its horizontal axis and with the parallax value d made to correspond to its vertical axis and is generated by causing the parallax value d above the height of the road surface out of the parallax value d of each coordinates (x, y) of the parallax image to be voted to a corresponding position (x, d) on the U map. In the coordinates (x, d) on the U map, a value (a frequency value) indicating the frequency (point) of the parallax value d voted to this position is stored.

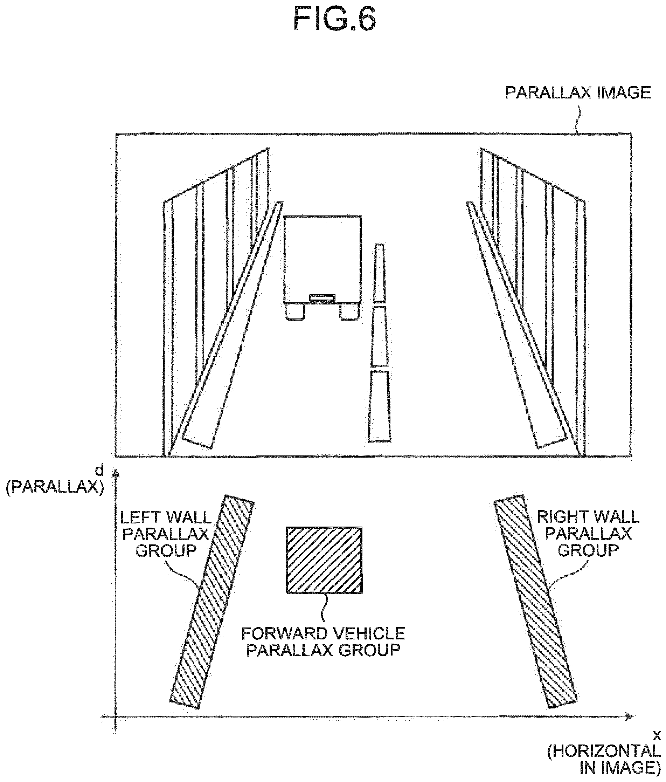

FIG. 6 is a diagram for illustrating a relation between the parallax image and the U map. To this U map, only pixels having higher parallax than the road surface among the pixels in the parallax image are voted. The horizontal axis of the parallax image and the horizontal axis of the U map are assumed to match. The horizontal axis of the U map may take the form in which the horizontal coordinate of the parallax image is converted into an actual distance or can take the form in which an actual height from the road surface, not the frequency value, is stored in the coordinates on the U map; the U map may be of any type, and it is assumed in this example that the horizontal axis is made to correspond to the x coordinate in the parallax image, and the frequency value is stored in each coordinates. Object detection corresponds to processing to find a parallax cluster on this map. In the example in FIG. 6, two side walls and a forward vehicle are detected as objects.

In the present embodiment, the U map generation unit 105 accesses each of a plurality of pixels while thinning the parallax image, determines, based on the parallax value d of the access pixel, the parallax value d of the non-access pixel indicating a pixel not to be accessed, and generates the U map based on the determined parallax value d. Details will be described below. Although the function of the U map generation unit 105 is implemented by executing a computer program by the CPU 31, this is not limiting; it may be implemented by an exclusive hardware circuit (e.g., the FPGA 32), for example.

In the following description, when the V map and the U map are not distinguished from each other, they may be called simply "disparity map". This disparity map is an example of the data based on the distance image (the parallax image in this example).

Referring back to FIG. 4, the description is continued. The clustering unit 106 detects an area in which parallax values the frequency value of which is higher than a certain value cluster on the U map generated by the U map generation unit 105 as a new object, estimates the type (human, vehicle, guardrail, and the like) of the object based on the coordinates, the size, or the like of the detected area on the brightness image, and imparts individual information indicating the type. The clustering unit 106 includes the CPU 31 and the FPGA 32, for example.

The rejection unit 107 is a functional unit that performs processing to reject objects other than targets to be recognized (a target of collision avoidance or the like) among detected objects using frame information (the brightness image, the parallax image, and the like), the U map, the individual information of the new object, and the like. The rejection unit 107 includes the CPU 31 and the FPGA 32, for example.

The tracking unit 108 is a functional unit that performs processing to, when a detected object (an object that has not been rejected) consecutively appears in a plurality of frames, determine whether the object is a target to be tracked and generates individual information indicating that the object is a target to be tracked when the object is a target to be tracked. The tracking unit 108 includes the CPU 31 and the FPGA 32, for example.

The control unit 109 is a functional unit that controls (collision avoidance action, output of warning, and the like) the vehicle 10 based on the results obtained by the above processing. The control unit 109 includes the vehicle ECU 51, for example.

The following describes a specific method for generating disparity map. The V map generation unit 103 or the U map generation unit 105 of the present embodiment (both are examples of a "data generation unit"), when generating disparity map, accesses each of a plurality of pixels in order while thinning the parallax image and determines the parallax value d of the non-access pixel between a first access pixel (an access pixel of interest) and a second access pixel to be accessed next to be the same value as the parallax value d of the first access pixel and votes the parallax value d. In the following, the system that thus determines (estimates) and votes the parallax value d of the non-access pixel based on the parallax value d of the access pixel may be called a "virtual voting system".

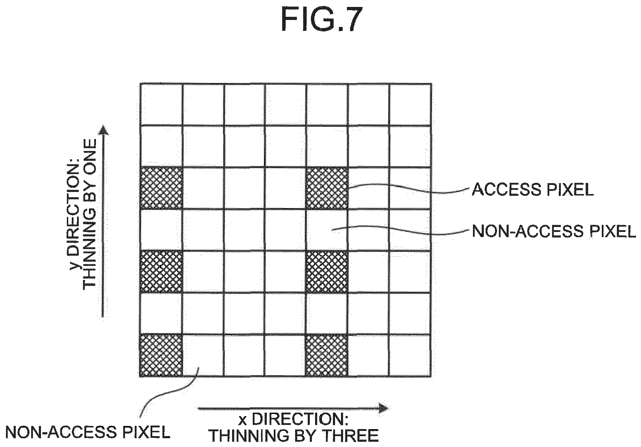

FIG. 7 is a diagram for illustrating thinning of pixels. When a thinning width in an x direction is four, and a thinning width in a y direction is two, for example, the number of non-access pixels between access pixels in the x direction is three, and the number of non-access pixels between access pixels in the y direction is one. In this case, the thinned non-access pixels are defined as thinned pixels. In the following, pixels not thinned (pixels to be accessed) may be called "access pixels," and pixels that have been thinned (non-access pixels) may be called "thinned pixels".

In generating disparity map, a system that accesses and votes all pixels is called an all pixels voting system. In this system, the processing time is longer than those of the virtual voting system and a simple thinning system described below, but no information losses occur. In generating disparity map, a system that votes only access pixels and does not vote thinned pixels is called the simple thinning system. In this system, the processing time is shorter than those of the all pixels voting system and the virtual voting system, but information losses occur, and thus object detection accuracy degrades.

In contrast, the virtual voting system of the present embodiment, in generating disparity map, while performing thinning with a certain thinning width, estimates the parallax value d of the thinned pixel based on the parallax value d of the access pixel and votes the access pixel and the thinned pixel together, and a valid parallax point on disparity map can be increased while reducing the number of accesses to the parallax image. With this system, a reduction in object detection accuracy can be inhibited while reducing the processing time.

This virtual voting system, in the case of the parallax image (the distance image), assumes that the surroundings of a pixel of interest in the image have high possibility of being pixels of the same subject and thus also have high possibility of having close pixel values. In the case of the brightness image, for example, when the surroundings of the pixel of interest correspond to a boundary of patterns due to the texture of the subject or the like, a pixel value significantly changes. However, in the case of the parallax image (the distance image), the pixel values of the same object are likely to be similar distances regardless of texture, and the above assumption is more likely to be established. Under this assumption, when disparity map based on the parallax image is generated, even when a pixel on the right of the pixel of interest, for example, is not actually accessed and is voted while being regarded as the same pixel, a generally favorable parallax value d can be voted (though there are some small changes). Not limited to a right-and-left direction, the same holds true for an up-and-down direction and an oblique direction. In other words, the virtual voting system focuses on the fact that the pixel of interest and its nearby pixels in the parallax image have high possibility of having close parallax values d, determines (estimates), based on the parallax value d of the access pixel, the parallax value d of its nearby thinned pixels, and votes the access pixel and the thinned pixels together. With this system, a valid voting point can be increased while reducing the processing time.

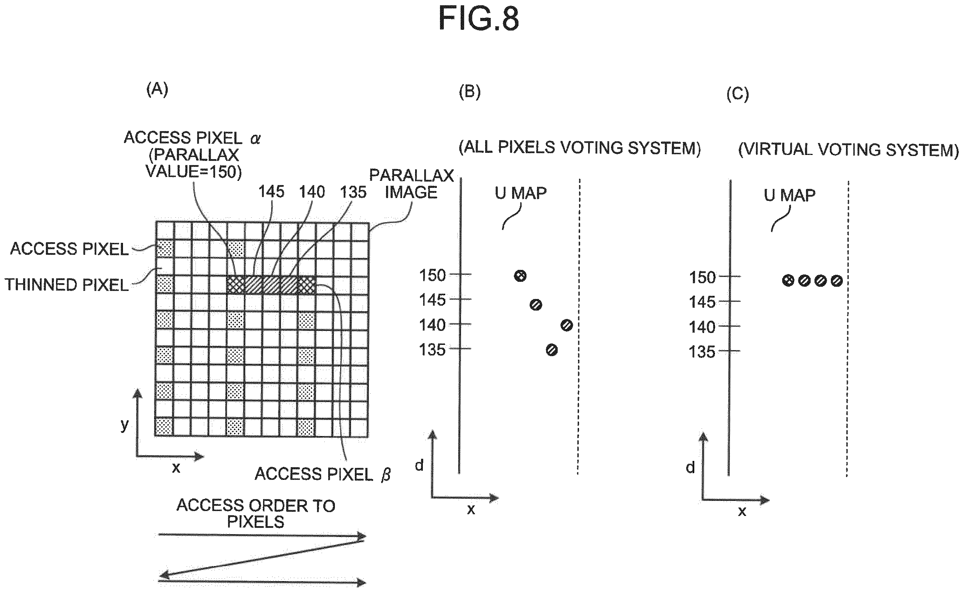

The following describes the virtual voting system of the present embodiment with the U map as an example. FIG. 8 is a diagram for illustrating difference between the all pixels voting system in the horizontal direction in the U map and the virtual voting system of the present embodiment. As illustrated at (A) in FIG. 8, the pixel of interest in the parallax image is named an access pixel α, and voting up to a pixel β to be accessed next (an access pixel β) is considered. In this example, an access order to pixels advances processing in the right direction with the upper left as a start point, upon completion of processing in one line, advances to a line in the down direction, and performs accesses to access pixels in the line in order from the left end toward the right direction, and this is not limiting; any access order can be employed. Lines of interest may be changed from down to up, for example. In the example in FIG. 8, the parallax value d of the access pixel α is 150, the parallax value d of a thinned pixel on the right of the access pixel α is 145, the parallax value d of a thinned pixel on the right thereof is 140, and the parallax value d of a thinned pixel on the further right thereof is 135.

The all pixels voting system actually accesses the three thinned pixels in the section from the access pixel α to the access pixel β and votes the three thinned pixels to the U map. In this case, the U map after voting is like (B) in FIG. 8.

In contrast, the virtual voting system of the present embodiment, because the three thinned pixels are pixels near the pixel of interest (the access pixel α), regards (estimates) them as having the same pixel value (the parallax value d) as that of the access pixel α, and votes the three thinned pixels with only their voting positions changed. In this case, the U map after voting is like (C) in FIG. 8. Although there is an error compared with (B) in FIG. 8, it is recognized that a generally favorable parallax value d is voted.

Thus, the virtual voting system of the present embodiment is employed, whereby the parallax value estimated to be valid can be determined and voted to the U map without accessing the thinned pixels, and the valid parallax point on the U map increases, and detection accuracy can be improved.

Although in this example all the three thinned pixels between the access pixel α of interest and the access pixel β to be accessed next are virtually voted, this is not limiting; less than three number of thinned pixels may be virtually voted, for example. When the thinning width is large, for example, if all the thinned pixels are virtually voted, many pixels to which an estimated parallax value d (the parallax value d that can indicate a value different from the actual one) has been assigned will be voted to the U map, and detection accuracy may be adversely affected.

To sum up, the virtual voting system to which the present invention is applied may take the form of determining the parallax value d (an example of the "distance information") of one or more non-access pixels (thinned pixels) between the first access pixel (the access pixel α in this example) and the second access pixel to be accessed next (the access pixel β in this example) to be the same value as the parallax value d of the first access pixel and voting the parallax value d.

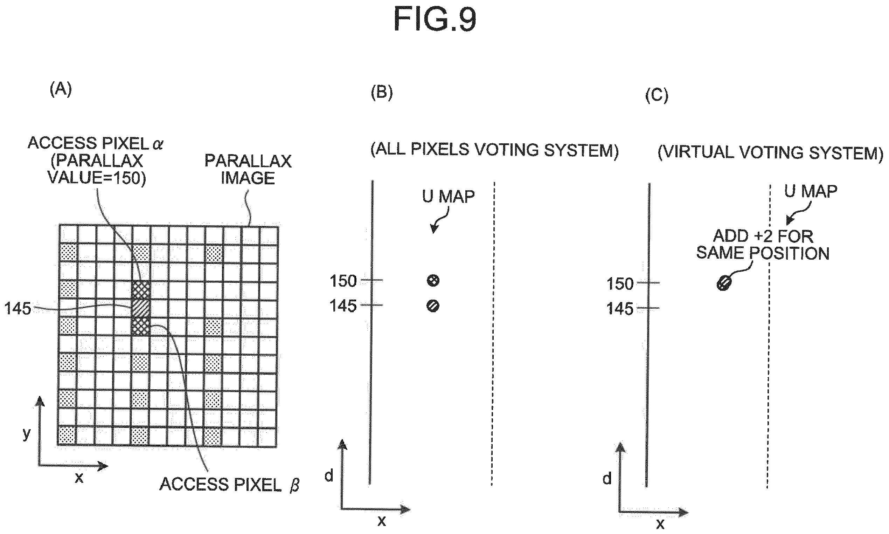

Not only for the horizontal direction, but also for the vertical direction, similar processing can be performed as illustrated in FIG. 9. In the case of the U map, when the virtual voting system is employed for the vertical direction, the x coordinate is the same between upper and lower parts, and voting is performed on the same coordinates on the U map (refer to (C) in FIG. 9).

After performing determination on the pixel of interest (the access pixel of interest) about the validity/invalidity of its parallax value d, whether virtual voting using the parallax value d of the pixel of interest is performed may be determined. Some pixels cannot calculate parallax (cannot perform matching when parallax is calculated by block matching of right and left images) because of being during the night time or being a black subject, for example. Assuming the case, a valid parallax range is defined in advance, and when the parallax value d of the pixel of interest is out of the valid parallax range, the pixel of interest may be determined to be invalid, and the pixel of interest and non-access pixels between the pixel of interest and the next access pixel are not necessarily voted (not virtually voted). In this case, a processing time occurring by virtually voting invalid pixels can be reduced. However, this is not limiting, and even the invalid pixels may be processed. When branching processing such as determination processing is inserted, the processing time may adversely increase when batch processing is performed by a circuit such as the FPGA 32. Consequently, in some cases it is advantageous to process pixels regardless of their being valid or invalid by the virtual voting system without inserting branching.

Although the above performs the validity/invalidity determination on the pixel of interest based on the relation between the parallax value d of the pixel of interest and the valid parallax range determined in advance, this is not limiting. If the parallax value d of the pixel of interest is a value indicating that the height from the road surface is out of a certain range (e.g., extremely high parallax), it can be regarded as invalid, for example. Thus, any determination standard can be set for the pixel of interest. To sum up, conditions for determining that the access pixel is valid may include that the parallax value d (the distance information) of the access pixel is within a range determined in advance or include that the parallax value d (the distance information) of the access pixel indicates a height within a certain range from the road surface.

For each line in the parallax image, any of the virtual voting system, the all pixels voting system, and the simple thinning system may be employed. They can be used in the following way: in and around the central area of the image, in which a forward vehicle is likely to appear, the all pixels voting system is employed; in areas above and below it, the virtual voting system is employed; and in areas of the lowest importance (in which the possibility of a target to be detected appearing is slim), the simple thinning system is employed, for example. An employment standard of each system can be used in combination so as to obtain a favorable result considering trade-off between a processing time and detection accuracy. One possible use is as follows: an image is divided into horizontally elongated areas with a certain vertical width, and the voting system and thinning widths in the x and y directions are determined for each area, for example (when parallax image size is (horizontal × vertical) = (2,000 × 1,000), the vertical direction is divided into five to set 2,000 × 200 as one area, for example).

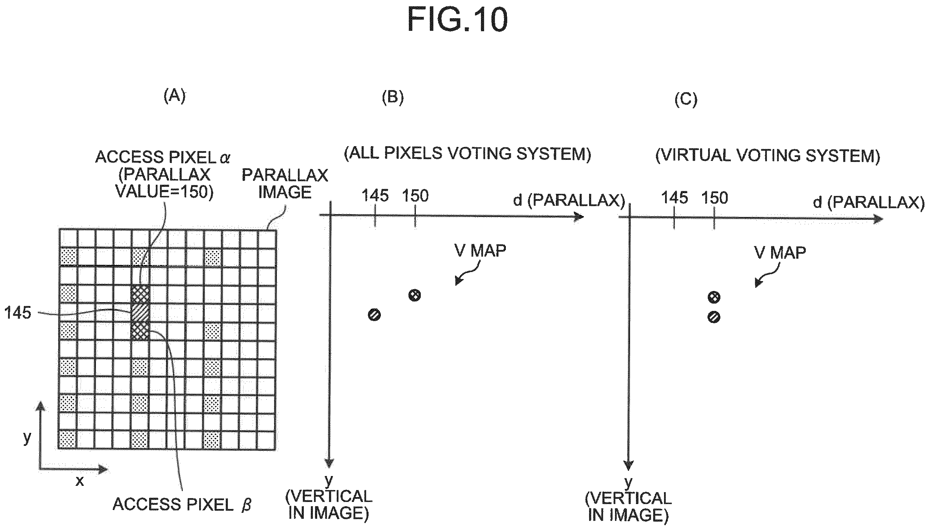

Although the above describes a method when the U map is generated using the virtual voting system, this is not limiting. The V map can also be generated using the virtual voting system described above, for example. FIG. 10 is a comparison diagram when the all pixels voting system or the virtual voting system is used for the vertical direction in generating the V map. The V map and the U map only vertically and horizontally reverse the coordinates of the parallax value d, and the virtual voting system can be performed by a method similar to the above. For the horizontal direction of the V map also, the virtual voting system can be used by a procedure similar to that when the virtual voting system is employed for the horizontal direction of the U map.

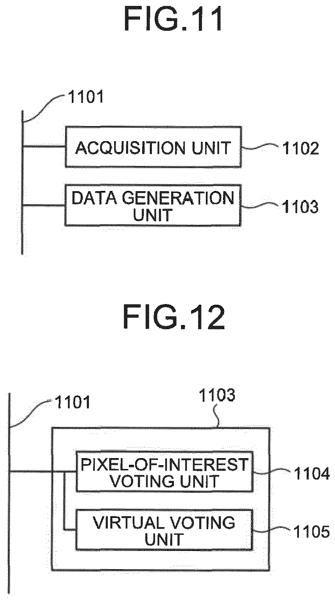

FIG. 11 is a diagram of an example of a functional configuration of the U map generation unit 105. The V map generation unit 103 also has the same functional configuration. As illustrated in FIG. 11, the U map generation unit 105 has an acquisition unit 1102 and a data generation unit 1103. The acquisition unit 1102 acquires the parallax image (an example of the "distance image"). In this example, the parallax image generated by the parallax calculation unit 102 is transmitted to the U map generation unit 105 via a network bus 1101. The acquisition unit 1102 acquires this parallax image.

The data generation unit 1103 generates the U map (an example of "data") based on the parallax image acquired by the acquisition unit 1102. In this example, the data generation unit 1103 has a function of generating the U map by the virtual voting system described above based on the parallax image acquired by the acquisition unit 1102.

The data generation unit 1103 accesses each of a plurality of pixels in order while thinning the parallax image, determines, based on the parallax value d (an example of the "distance information") of the access pixel indicating a pixel to be accessed, the parallax value d of the non-access pixel indicating a pixel not to be accessed, and generates the U map using the determined parallax value d.

More specifically, the data generation unit 1103 determines the parallax value of one or more non-access pixels (thinned pixels) between the first access pixel indicating the access pixel of interest and the second access pixel to be accessed next among access pixels in the parallax image to be the same value as the parallax value of the first access pixel. The details are as described in the above description of the virtual voting system.

The data generation unit 1103 determines whether the access pixel is valid and, when the access pixel is valid, determines the parallax value d of the non-access pixels based on the parallax value d of the access pixel. When the U map is generated, examples of the conditions for determining that the access pixel is valid may include a condition that the parallax value d of the access pixel indicates a height within a certain range from the road surface. Examples of the conditions for determining that the access pixel is valid may include a condition that the parallax value of the access pixel is within a valid parallax range determined in advance; or these conditions may be combined.

FIG. 12 is a diagram of an example of functions of the data generation unit 1103. As illustrated in FIG. 12, the data generation unit 1103 has a pixel-of-interest voting unit 1104 and a virtual voting unit 1105. The pixel-of-interest voting unit 1104 has a function of voting the access pixel of interest to the U map. The virtual voting unit 1105 has a function of, based on the parallax value d of the access pixel of interest (the first access pixel), voting (voting based on a virtual parallax value d (virtual voting)) the non-access pixels (the thinned pixels) between the access pixel of interest and the access pixel to be accessed next (the second access pixel) to the U map.

Although in this example the respective functions of the acquisition unit 1102 and the data generation unit 1103 are implemented by executing computer programs by the CPU 31, this is not limiting; they may be implemented by an exclusive hardware circuit (e.g., the FPGA 32), for example.

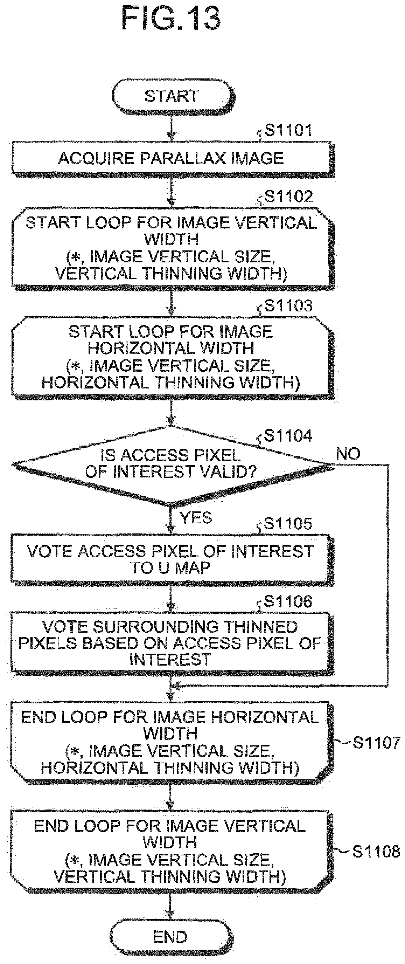

FIG. 13 is a flowchart of an operation example of the U map generation unit 105. The following describes the operation example of the U map generation unit 105; an operation example of the V map generation unit 103 can also be considered similarly.

As illustrated in FIG. 13, first, the acquisition unit 1102 acquires a parallax image (Step S1101). Next, the data generation unit 1103 repeatedly executes processing at Steps S1103 to S1106 on each line of the parallax image acquired at Step S1101 (Step S1102). The data generation unit 1102 selects lines to be processed in order with a certain vertical thinning width. The description inside the parentheses attached to "START LOOP FOR IMAGE VERTICAL WIDTH" at Step S1102 in FIG. 13 indicates (start coordinates, end coordinates, a movement amount). The start coordinates can be any ones, and the example in FIG. 13 is denoted by "*". When the parallax image is processed while area division is performed in the vertical direction, for example, image access is executed with the set vertical thinning width for each area.

Next, the data generation unit 1102 repeatedly executes processing at Step S1104 to Step S1106 on the line designated at Step S1102 (the line extending in the horizontal direction and positioned at any y in the vertical direction) (Step S1103). The data generation unit 1102 selects pixels to be processed (access pixels) in order with a certain horizontal thinning width. The description inside the parentheses attached to "START LOOP FOR IMAGE HORIZONTAL WIDTH" at Step S1103 in FIG. 13 indicates (start coordinates, end coordinates, a movement amount). The start coordinates can be any ones, and the example in FIG. 13 is denoted by "*". When the parallax image is processed while area division is performed in the vertical direction, for example, image access is executed with the set horizontal thinning width for each area.

The following describes the processing at Step S1104 to Step S1106. At Step S1104, the data generation unit 1103 determines whether the access pixel of interest (the selected access pixel) is valid. When the U map is generated, only pixels having a higher parallax value d than the estimated road surface are voted, and at this step the data generation unit 1103 determines whether the parallax value d of the access pixel is higher than the road surface and falls within a range indicating being within an appropriate range and can thereby determine the validity/invalidity of the access pixel. In the V map, the height determination from the road surface in the determination is unnecessary, and only whether the parallax value d is within the appropriate range may be determined.

As a result of the determination, if the access pixel is valid (Yes at Step S1104), the process shifts to Step S1105; if the access pixel is invalid (No at Step S1104), the process shifts to Step S1107.

At Step S1105, the data generation unit 1103 votes the access pixel to a corresponding position on the U map. Next, at Step S1106, the data generation unit 1103 votes (virtually votes) surrounding thinned pixels based on the access pixel, and the process shifts to Step S1107. The details of this voting are as described above. In this process, when area division is performed, the voting system can be determined for each area. In the case of the all pixels voting system, for example, there are no thinned pixels, and this processing is not executed. In the case of the simple thinning system also, this processing is not executed. In the case of the virtual voting system, as described above, voting can be executed in any direction of the vertical direction, the horizontal direction, and the oblique direction. In this process, voting may be executed only for any one direction or executed for a plurality of directions.

At Step S1107, when any access pixel to be processed remains in the line, the data generation unit 1103 repeats the processing at Step S1103 and later steps. When no access pixel to be processed remains in the line, the process shifts to Step S1108 in order to shift to the next line.

At Step S1108, when any line to be processed remains in the parallax image after the processing of one line has completed, the data generation unit 1103 repeats the processing at Step S1102 and later steps. When no line to be processed remains in the parallax image, the processing ends.

As described above, the present embodiment focuses on the fact that the pixel of interest and its nearby pixels in the parallax image have high possibility of having close parallax valued d, determines, based on the parallax value d of the access pixel, the parallax value d of its nearby thinned pixels, and votes the access pixel and the thinned pixels together. With this system, the valid voting point can be increased, and a reduction in object detection accuracy can be inhibited while reducing the processing time.

### Second Embodiment

The following describes a second embodiment. The virtual voting system of the present embodiment, in generating disparity map while thinning the parallax image, determines (estimates), based on the parallax value d of a pixel around the access pixel of interest (the first access pixel) (typically an access pixel that has been accessed), the parallax value d of one or more thinned pixels (non-access pixels) between the first access pixel and the access pixel to be accessed next (the second access pixel) and votes the parallax value d. The following describes specific details. Descriptions of parts common to those of the first embodiment will be omitted as appropriate.

In the first embodiment, the virtual voting system that votes the thinned pixels based only on the access pixel of interest has been described. In this system, when the access pixel of interest is invalid, the valid parallax point on disparity map may not be able to be increased. This is conspicuous in scenes in which parallax is intrinsically less such as nighttime, for example. This system depends on the access pixel, and a case is assumed in which the access pixel is invalid but a next non-access pixel is valid, for example, and in such a case also, the valid parallax point may not be able to be increased.

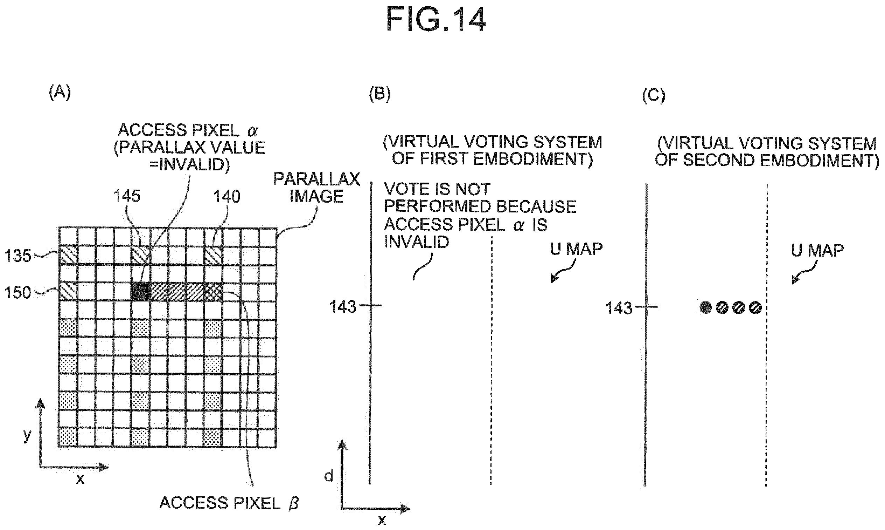

Given these circumstances, the present embodiment employs a system that performs virtual voting using the access pixel of interest and the access pixel that has been accessed around the access pixel of interest. The following gives a specific description. FIG. 14 is a diagram for illustrating difference between the first embodiment and the present embodiment (the second embodiment). This example assumes that the access pixel α of interest is invalid. When the virtual voting system of the first embodiment is executed in this state, as a result of validity/invalidity determination on the access pixel α, it is determined to be invalid, and the access pixel α and the three thinned pixels between the access pixel α and the access pixel β to be accessed next will not be voted.

In contrast, the present embodiment, when the access pixel is invalid, determines (estimates) the parallax value d of the thinned pixels to be virtually voted (hereinafter may be referred to as an "estimated value") using the parallax value d of the surrounding access pixel that has been accessed. When an access order to pixels in the parallax image is the upper-left origin, the right direction, and the down direction like FIG. 8, for example, the above and left sides of the access pixel of interest have already been accessed. Consequently, the parallax value d of these surrounding pixels that have been accessed is stored and held in a buffer, and when the access pixel of interest is invalid, the parallax value d of the access pixel of interest and the thinned pixels until the access pixel to be accessed next is determined using the parallax value d of the surrounding pixels stored in the buffer and votes the parallax value d. Examples of a method for generating the estimated value include an average value, a weighted average value, a median, a maximum value, a minimum value, and a mode in a surrounding pixel group (one or more surrounding pixels). However, this is not limiting, and the estimated value can be determined by any method so long as it is a value generated from the parallax value d of the surrounding pixels. The surrounding pixels can include an invalid pixel, and in that case, the invalid pixel may be ignored.

A result of voting in accordance with the virtual voting system of the present embodiment is like the rightmost diagram of FIG. 8. Although in this example the estimated value for four pixels including the access pixel α of interest is voted, any number can be voted so long as it is a number up to the sum of the access pixel α of interest and the thinned pixels.

Accessing the image in order to acquire the parallax value d of the surrounding pixels leads to an increase in a processing time, which impairs the meaning of performing virtual voting in the first place, and the buffer is required to be designed so as to make an access time shorter than accessing the image (e.g., reducing the buffer size). To give speedup first priority, storing only the parallax value d of the left surrounding pixel (that is, the surrounding pixel accessed immediately before) gives the shortest processing time. For the upper line, a buffer with a size of "image horizontal width/thinning width" is prepared in the worst case, and an access time to this buffer is required. However, the access pixel in the left direction is a pixel processed immediately before, which eliminates the need to prepare a buffer (storing in a single variable is enough).

When two or more pixels that have been accessed on the left side of the pixel of interest are used as the estimated value, only an added value and the number of pixels added are required to be stored, and in this case also, there is no need to prepare a buffer. The range used as the surrounding pixels and the number of pixels used can be determined to be any range and number. Although in the example in FIG. 14 four pixels on the upper-left, upper, upper-right, and left sides of the access pixel are the surrounding pixels, they may further be extended. However, when they are extremely extended, pixels irrelevant to the pixel of interest can be mixed, which requires caution. As described above, the surrounding pixels in the upper direction are required to be accumulated in the buffer, and when they are extended further, the buffer size to be prepared becomes larger, and an access processing time increases.

Although in the above example the estimated value is generated using the parallax value d of the access pixel that has been accessed around the access pixel of interest, this is not limiting; the parallax value d of a pixel, having been virtually voted, around the access pixel of interest may be used.

Although the above limitedly describes the case when the access pixel of interest is invalid, the same also applies to a case when the access pixel of interest is valid. In that case, as an example, the estimated value of the thinned pixels between the access pixel of interest and the access pixel to be accessed next can be generated from the parallax value d of the access pixel of interest and the parallax value d of its surrounding pixel.

Although FIG. 14 exemplifies the U map, the virtual voting system of the present embodiment can be performed also on the V map by the same procedure. The present embodiment is similar to the first embodiment in that area division is performed, and the thinning width can be set for each area, that the voting system can be determined for each line, and that voting can be performed in any non-access direction.

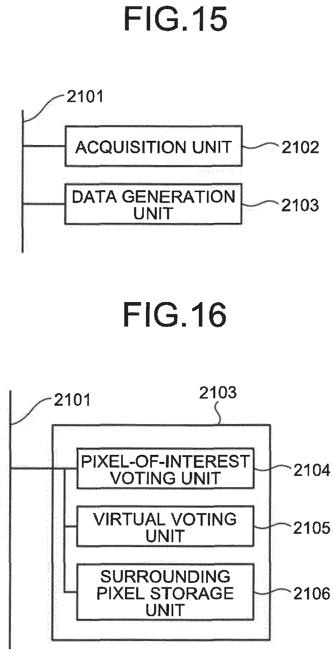

FIG. 15 is a diagram of an example of a functional configuration of the U map generation unit 105 of the present embodiment. A functional configuration of the V map generation unit 103 of the present embodiment can also be considered similarly. As illustrated in FIG. 15, the U map generation unit 105 has an acquisition unit 2102 and a data generation unit 2103. The acquisition unit 2102 acquires the parallax image (an example of the "distance image"). In this example, the parallax image generated by the parallax calculation unit 102 is transmitted to the U map generation unit 105 via a network bus 2101. The acquisition unit 2102 acquires this parallax image.

The data generation unit 2103 generates the U map (an example of the "data") based on the parallax image acquired by the acquisition unit 1102. In this example, the data generation unit 2103 has a function of generating the U map by the virtual voting system described above based on the parallax image acquired by the acquisition unit 2102.

The data generation unit 2103 of the present embodiment determines, based on the parallax value d (an example of the "distance information") of one or more pixels around the first access pixel indicating the access pixel of interest among access pixels in the parallax image, the parallax value of one or more thinned pixels (non-access pixels) between the first access pixel and the second access pixel to be accessed next.

More specifically, the data generation unit 2103 recalculates the parallax value d of the first access pixel based on the parallax value of the one or more pixels around the first access pixel and determines the parallax value of the one or more non-access pixels between the first access pixel and the second access pixel to be the same value as the recalculated parallax value.

Further, the data generation unit 2103 can determine any of an average value, a weighted average value, a maximum value, a minimum value, a median, and a mode of the parallax value d of the one or more pixels around the first access pixel (which may be access pixels that have been accessed or thinned pixels that have been virtually voted) and calculate the determined value as the parallax value d of the first access pixel.

In this example, the data generation unit 2103 votes the thinned pixels by the virtual voting system of the first embodiment when the access pixel of interest is valid and virtually votes the access pixel of interest and thinned pixels using the parallax value d of a surrounding pixel of the access pixel of interest when the access pixel of interest is invalid. However, this is not limiting, and even when the access pixel of interest is valid, the access pixel of interest and the thinned pixels can be virtually voted using the parallax value d of the surrounding pixel of the access pixel of interest. A method for determining validity/invalidity of the access pixel is similar to that of the first embodiment, and a detailed description thereof is omitted.

FIG. 16 is a diagram of an example of functions of the data generation unit 2103 of the present embodiment. As illustrated in FIG. 16, the data generation unit 2103 has a pixel-of-interest voting unit 2104, a virtual voting unit 2105, and a surrounding pixel storage unit 2106. The pixel-of-interest voting unit 2104 has a function of voting the access pixel of interest to the U map. The virtual voting unit 2105 has a function of voting the thinned pixels between the access pixel of interest and the access pixel to be accessed next to the U map. The surrounding pixel storage unit 2106 stores therein the parallax value d (including the estimated value) of the access pixel that has been voted.

Although in this example the respective functions of the acquisition unit 2102 and the data generation unit 2103 are implemented by executing computer programs by the CPU 31, this is not limiting; they may be implemented by an exclusive hardware circuit (e.g., the FPGA 32), for example. The surrounding pixel storage unit 216 may be implemented by a storage such as the ROM 33, for example.

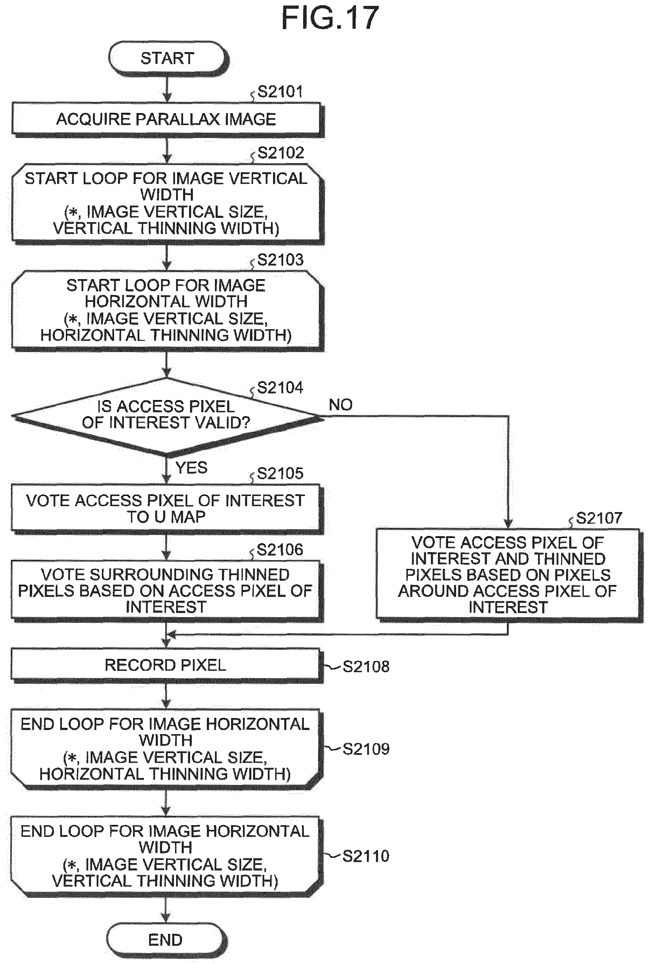

FIG. 17 is a flowchart of an operation example of the U map generation unit 105. The following describes the operation example of the U map generation unit 105; an operation example of the V map generation unit 103 can also be considered similarly.

As illustrated in FIG. 17, first, the acquisition unit 2102 acquires a parallax image (Step S2101). Next, the data generation unit 2103 repeatedly executes processing at Steps S2103 to S2109 on each line of the parallax image acquired at Step S2101 (Step S1102). This processing corresponds to the processing at Step S1102 in FIG. 13.

Next, the data generation unit 2103 repeatedly executes processing at Step S2104 to Step S1108 on the line designated at Step S2102 (Step S2103). This processing corresponds to the processing at Step S1103 in FIG. 13.

The following describes the processing at Step S2104 to Step S2108. At Step S2104, the data generation unit 2103 determines whether the access pixel of interest (the selected access pixel) is valid. This processing similar to the processing at Step S1104 in FIG. 13, and a detailed description thereof is omitted.

If the access pixel is valid as a result of the determination (Yes at Step S2104), the process shifts to Step S2105; if the access pixel is invalid (No at Step S2104), the process shifts to Step S2107.

In this example, when the access pixel is valid, the virtual voting system described in the first embodiment is executed, and the processing at Step S2105 and Step S2106 is the same as the processing at Step S1105 and Step S1106 in FIG. 13. In contrast, when the access pixel is invalid, the data generation unit 2103 estimates, based on the parallax value d of the surrounding pixel of the access pixel of interest, the parallax value d of the access pixel of interest and the one or more thinned pixels between the access pixel of interest and the access pixel to be accessed next and votes the parallax value d (Step S2107). As described above, even when the access pixel of interest is valid, the access pixel of interest and the thinned pixels may be voted by the virtual voting system of the present embodiment. In this case, the processing at Step S2105 and Step S2106 illustrated in FIG. 17 can be omitted. The virtual voting can be executed for any direction of the vertical direction, the horizontal direction, and the oblique direction. In this process, the virtual voting may be executed only for any one direction or executed for a plurality of directions.

After Step S2106 or Step S2107, the data generation unit 2103 stores the parallax value d of the access pixel of interest in the surrounding pixel storage unit 2106 (Step S2108). In this process, when the thinned pixels that have been virtually voted are used as the surrounding pixels at Step S2107, the parallax value d of the thinned pixels estimated at Step S2107 can also be stored in the surrounding pixel storage unit 2106. The following processing at Step S2109 corresponds to the processing at Step S1107 in FIG. 13, and the processing at Step S2110 corresponds to the processing at Step S1108 in FIG. 13, and detailed descriptions thereof will be omitted.

As described above, the present embodiment determines, based on the parallax value d of the pixels around the access pixel of interest (which are typically access pixels that have been accessed, but this is not limiting, and may be thinned pixels that have been virtually voted), the parallax value d of the one or more thinned pixels between the access pixel of interest and the access pixel to be accessed next and votes the parallax value d together with the access pixel of interest. With this system, even when the access pixel of interest is invalid, for example, based on the parallax value d of the surrounding pixel thereof, the parallax value d of the one or more thinned pixels between the access pixel of interest and the access pixel to be accessed next can be determined and voted, and the number of voting can be increased more stably.

The computer programs executed in the device control system 1 of the embodiments may be recorded and provided in a computer-readable recording medium such as a compact disc read only memory (CD-ROM), a flexible disk (FD), a compact disc recordable (CD-R), a digital versatile disc (DVD), and a universal serial bus (USB) as an installable or executable file or may be provided or distributed via a network such as the Internet. The various kinds of computer programs may be embedded and provided in a ROM, for example.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. An information processing apparatus comprising:
an acquisition unit configured to acquire a distance image including distance information for each pixel; and
a data generation unit configured to generate data based on the distance image,
the data generation unit is configured to access each of a plurality of pixels while thinning the distance image, determine distance information of a non-access pixel indicating a pixel not to be accessed, based on distance information of an access pixel indicating a pixel to be accessed, and generate the data using the determined distance information.

2. The information processing apparatus according to claim 1, wherein
the non-access pixel includes one or more non-access pixels between a first access pixel and a second access pixel to be accessed next, and
the data generation unit is configured to determine distance information of the one or more non-access pixels to be the same value as distance information of the first access pixel.

3. The information processing apparatus according to claim 1, wherein
the non-access pixel includes one or more non-access pixels between a first access pixel and a second access pixel to be accessed next, and
the data generation unit is configured to determine, distance information of the one or more non-access pixels based on distance information of one or more pixels around the first access pixel.

4. The information processing apparatus according to claim 3, wherein the data generation unit is configured to recalculate distance information of the first access pixel based on the distance information of the one or more pixels around the first access pixel and determine the distance information of the one or more non-access pixels between the first access pixel and the second access pixel to be the same value as the recalculated distance information.

5. The information processing apparatus according to claim 4, wherein the data generation unit is configured to determine any of an average value, a weighted average value, a maximum value, a minimum value, a median, and a mode of the distance information of the one or more pixels around the first access pixel and calculate the determined value as the distance information of the first access pixel.

6. The information processing apparatus according to any one of claims 3 to 5, wherein the one or more pixels around the first access pixel are access pixels that have been accessed.

7. The information processing apparatus according to any one of claims 1 to 6, wherein the data generation unit is configured to determine whether the access pixel is valid and, when the access pixel is valid, determine the distance information of the non-access pixel based on the distance information of the access pixel.

8. The information processing apparatus according to claim 7, wherein a condition for determining that the access pixel is valid includes that the distance information of the access pixel is within a range determined in advance.

9. The information processing apparatus according to any one of claims 1 to 8, wherein the data is a first map indicating relation between positions in a vertical direction and distances in the distance image or a second map indicating relation between positions in a horizontal direction and distances above a height of a road surface in the distance image.

10. The information processing apparatus according to claim 9, wherein in a case where the data is the second map, a condition for determining that the access pixel is valid includes that the distance information of the access pixel indicates a height within a certain range from the road surface.

11. The information processing apparatus according to any one of claims 1 to 10, wherein the distance image is a parallax image including a parallax value for each pixel.

12. A system comprising:
the information processing apparatus according to any one of claims 1 to 10; and
a control apparatus configured to perform control based on a result of information processing by the information processing apparatus.

13. A movable body comprising:
the information processing apparatus according to any one of claims 1 to 10; and
a control apparatus configured to perform control based on a result of information processing by the information processing apparatus.

14. A method of information processing, comprising:
acquiring a distance image including distance information for each pixel; and
generating data based on the distance image,
wherein the method comprising, at the generating, accessing each of a plurality of pixels while thinning the distance image, determining distance information of a non-access pixel indicating a pixel not to be accessed, based on distance information of an access pixel indicating a pixel to be accessed, and generating the data using the determined distance information.

15. A program causing a computer to execute:
acquiring a distance image including distance information for each pixel; and
generating data based on the distance image,
wherein the program causes the computer to execute, at the generating, accessing each of a plurality of pixels while thinning the distance image, determining distance information of a non-access pixel indicating a pixel not to be accessed, based on distance information of an access pixel indicating a pixel to be accessed, and generating the data using the determined distance information.
